# EUROPEAN PATENT APPLICATION

(11) **EP 1 400 299 A1**
(43) Date of publication of application: **24.03.2004**
(21) Application number: 00962856.1
(22) Date of filing: 27.09.2000
(51) Int. Cl.: B23H 7/08

(54) **ELECTRODE WIRE FOR WIRE ELECTRICAL DISCHARGE MACHINE**

(71) Applicant: MITSUBISHI DENKI KABUSHIKI KAISHA, Tokyo 100-8310 (JP); Hitachi Cable, Ltd., Tokyo 100-8166 (JP)
(72) Inventor: AKIYOSHI, Masao, c/o Mitsubishi Denki K K, Chiyoda-ku, Tokyo 100-8310 (JP); SATOU, Seiji, c/o Mitsubishi Denki K K, Chiyoda-ku, Tokyo 100-8310 (JP); AOYAMA, Seigi, Kitaibaraki-shi, Ibaraki 319-1537 (JP); KURODA, Hiromitsu, Hitachi-shi, Ibaraki 319-1416 (JP); KIMURA, Takamitsu, Hitachi-shi, Ibaraki 319-1416 (JP)
(74) Representative: Popp, Eugen, Dr.
(86) International application number: PCT/JP2000/006632
(87) International publication number: WO 2002/026433

(57) **Abstract**

The present invention aims to increase concentration of Zn in a coating layer to enhance machining speed. Moreover, the present invention aims to perform removal of object material efficiently and enhance machining speed as well as accuracy in machining by increasing rigidity of the wire electrode to suppress vibration thereof during machining process.

The present invention is characterized in that the wire electrode for wire electrical discharge machine is constituted as a three-layered structure of an electroconductive core (1), a coating layer (2) of Cu-Zn intermetaric compound in other than α phase and a coating layer (3) of Cu-Zn alloy in α phase on the exterior of the coating layer (2), and that the thickness of the coating layer (3) is set to 5 to 15 µm. Furthermore, the coating layer (2) is preferably Cu-Zn alloy in β phase. Moreover, the core (1) is preferably made of Cu-Zr alloy.

## Description

### TECHNICAL FIELD

The present invention relates to a wire electrode to be used in a discharge machining with a wire electrical discharge machine.

### BACKGROUND ART

A wire electrical discharge machine is a device which machines a workpiece by discharges between a wire electrode and the workpiece.

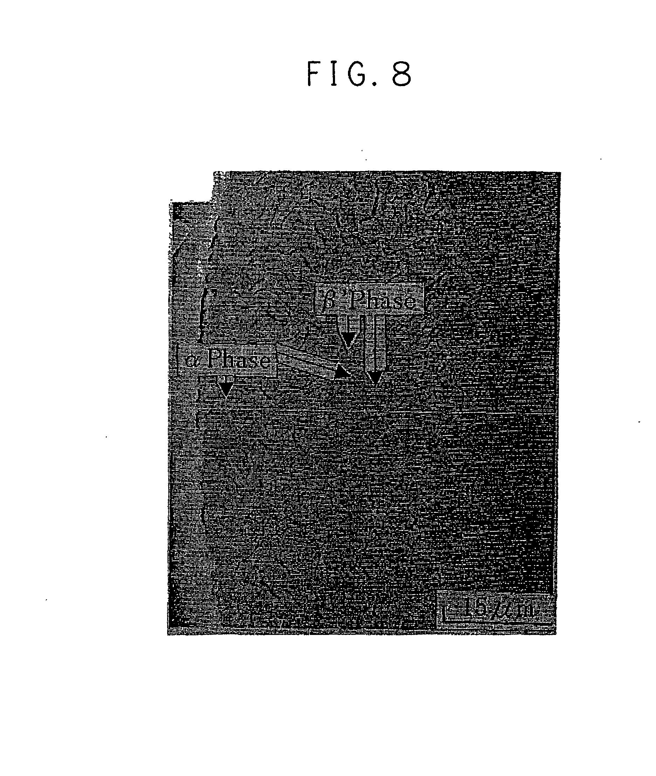

In order to increase the machining speed, an example of a wire electrode for a wire electrical discharge machine, wherein core material (i.e. a core) is coated with a layer of Cu-Zn intermetallic compound, is disclosed in HITACHI CABLE REVIEW No.18 (October 1999). A photograph of cross section of this wire electrode is shown in Fig. 8. The figure is a magnification of region near surface of the wire electrode, wherein the coating layer of Cu-Zn intermetallic compound covering the core can be seen. In Fig. 8, β phase of the intermetallic compound is seen in a string-like pattern and is surrounded by α phase. Moreover, the outermost region of the wire electrode consists of only α phase.

β phase which has higher Zn concentration than α phase has an advantage to increase machining speed, because β phase easily evaporates through discharges to blow out object material. On the other hand, β phase is brittle in a sense of metallography and has a disadvantage that there easily occur cracks during a cold wire drawing process in manufacturing a wire electrode. Since α phase with superior workability surrounds β phase with difficult workability, a wire electrode as shown in Fig. 8 can be easily formed to be a fine wire without any cracks or breaks during a cold wire drawing process.

Further, a similar wire electrode for a wire electrical discharge machine is disclosed in Japanese Unexamined Patent Publication No.300136/1997. Fig. 9 shows concentration of Zn in radial direction of this wire electrode. Region near surface of the wire electrode consists of α phase and the Zn concentration is approximately 30 wt. %. In the case where Zn concentration exceeds 40 wt. %, there appears β or γ phase having a different crystal structure from that of α phase. At the depth of 5 to 30 µm from the surface of the wire electrode, Zn concentration ranges from 35 to 45 wt. % where α and β phases coexist and Cu-Zn intermetallic compound with relatively high Zn concentration is formed.

As already described, although β and γ phases show the effect to blow out debris of the object material during electrical discharge machining and can enhance the machining speed, those are brittle in a sense of metallography and have a difficulty in cold wire drawing in wire electrode manufacturing.

Thus, in the conventional wire electrode for a wire electrical discharge machine, core material (i.e. a core) is surrounded by a layer of Cu-Zn intermetallic compound comprising β and α phases. Therefore, there are limitations in increasing Zn concentration of the Cu-Zn intermetallic layer and improving machining speed. Further, since β phase is surround by α phase, the effect of improvement in rigidity of the wire electrode which β phase intrinsically has cannot be exhibited adequately.

The present invention is made to solve the above problems and an object thereof is to increase Zn concentration in the coating layer and to improve the machining speed. A further object of the present invention is to remove object material efficiently and improve the machining speed and accuracy of machining, by improving the rigidity of wire electrode and suppressing the vibration during machining.

### DISCLOSURE OF INVENTION

The present invention is characterized in that a wire electrode has three-layered structure of an electroconductive core (1), a coating layer (2) made of Cu-Zn intermetallic compounds existing as other than α phase, and an outer coating layer (3) made of Cu-Zn alloy existing as α phase, and that thickness of the coating layer (3) is 5 to 15 µm.

Further, the coating layer (2) is preferably Cu-Zn alloy in β phase.

Moreover, the core (1) is preferably made of Cu-Zr alloy.

Furthermore, the core (1) might be made of Cu-Zn alloy.

### BRIEF DESCRIPTION OF DRAWINGS

Fig. 1 is a diagram showing a cross section of a wire electrode for a wire electrical discharge machine according to the present invention;
Fig. 2 is a photograph showing a cross section of a wire electrode for a wire electrical discharge machine according to the present invention;
Fig. 3 is a graph showing Zn concentration in a radial direction of cross section of a wire electrode for a wire electrical discharge machine according to the present invention;
Fig. 4 is a graph showing a relationship between the thickness of a coating layer 3 of Cu-Zn alloy in α phase and machining speed;
Fig. 5 is a graph showing a relationship between the thickness of a coating layer 2 of Cu-Zn intermetallic compound in other than α phase and machining speed;
Fig. 6 is a graph showing machining speed of a wire electrode for a wire electrical discharge machine according to embodiment 2 of the present invention, comparing with that of the conventional wire electrode;
Fig. 7 is a graph showing machining speed of a wire electrode for a wire electrical discharge machine according to Embodiments 3 and 4 of the present invention, comparing with that of the conventional wire electrode;
Fig. 8 is a magnified photograph showing cross section of the conventional wire electrode for a wire electrical discharge machine; and

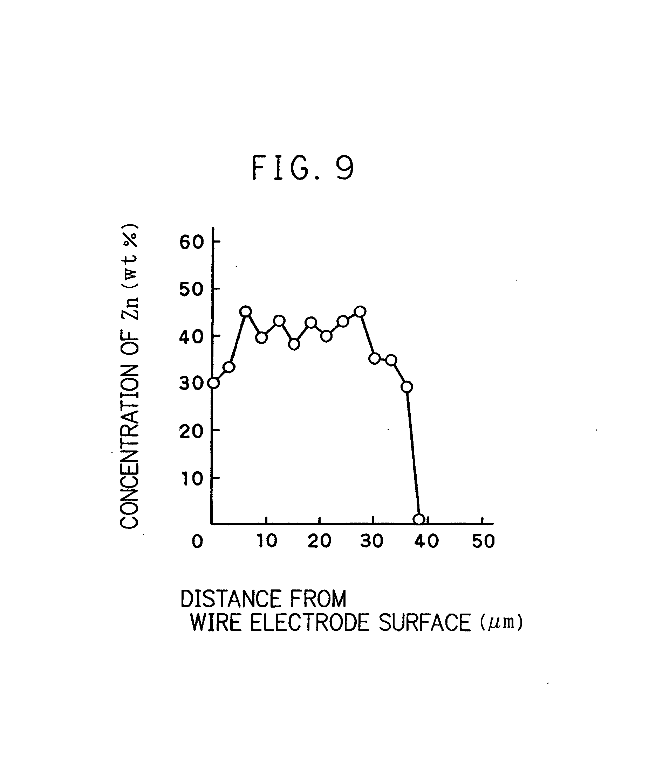

Fig. 9 is a graph showing Zn concentration in a radial direction of cross section of a conventional wire electrode for a wire electrical discharge machine.

### BEST MODE FOR CARRYING OUT THE INVENTION

### EMBODIMENT 1

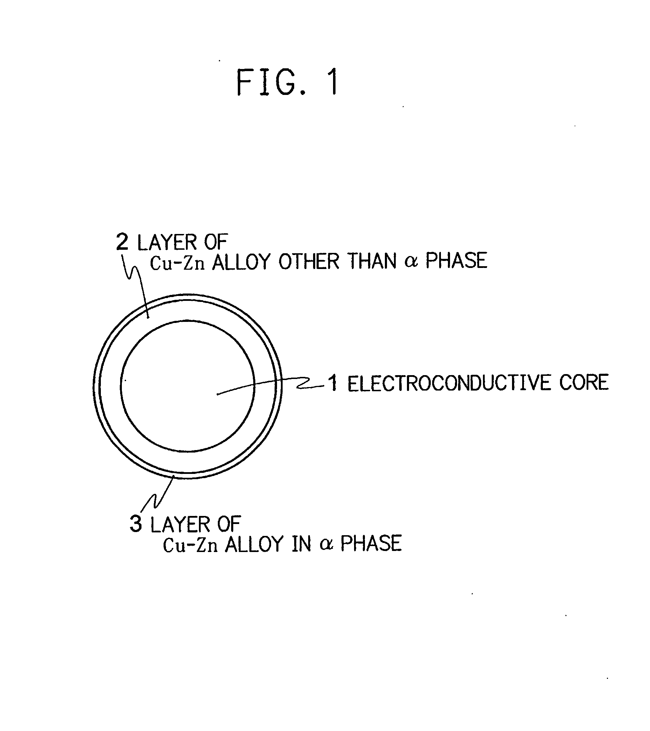

A wire electrode for a wire electrical discharge machine according to an embodiment of the present invention is described with referring to Fig. 1. Fig. 1 shows a cross section of the wire electrode. The wire electrode according to the present invention has a three-layered structure wherein a coating layer 2 of Cu-Zn intermetallic compound in other than α phase surrounds an electroconductive core 1, and a coating layer 3 of Cu-Zn alloy in α phase is formed outside the coating layer 2. The Cu-Zn intermetallic compound which constitutes the coating layer 2 is in other than α phase and the thickness thereof is increased to the utmost. Since the workability of wire drawing in wire electrode manufacturing becomes worse by increasing the thickness of the phase other than α phase, the thickness of coating layer 3 which is in α phase is increased as much as possible.

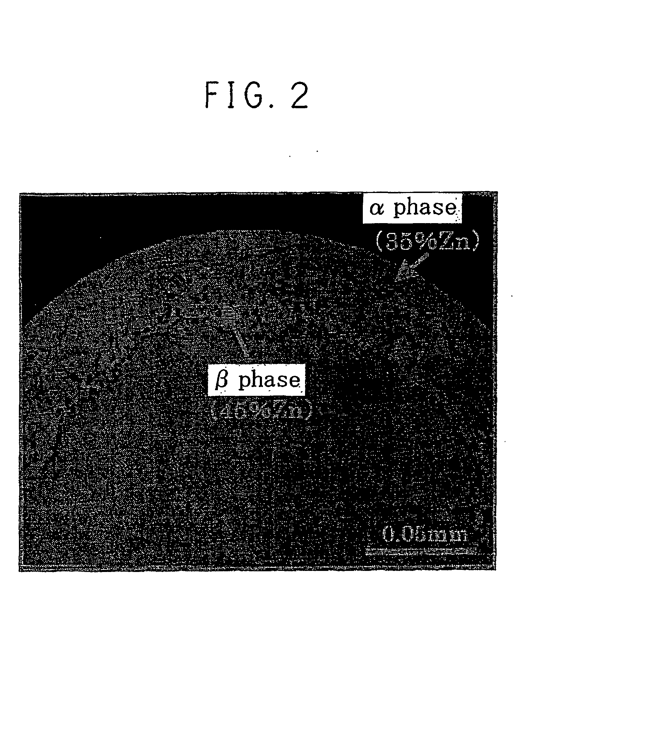

Fig. 2 shows a photograph of cross section of the wire electrode of the present invention. There can be clearly seen that the coating layer 3 of Cu-Zn alloy in α phase and the coating layer 2 of Cu-Zn intermetallic compound in other than α phase is clearly separated from each other to form a three-layered structure including the core 1.

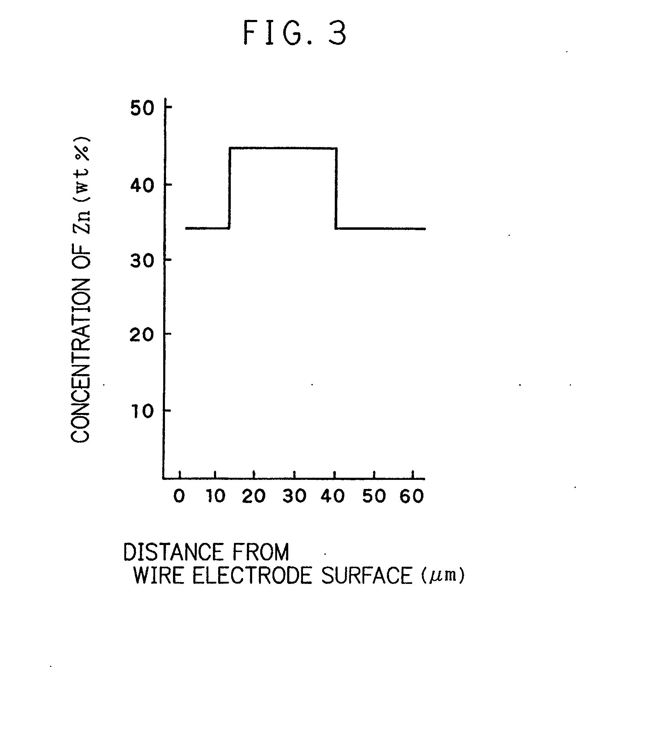

The coating layer 2 of Cu-Zn intermetallic compound in other than α phase has higher Zn concentration compared with the coating layer 3 of Cu-Zn alloy in α phase. In Fig. 3, Zn concentration in a radial direction of cross section is shown for the wire electrode of the present invention. In the region where the distance from the wire electrode surface is 0 to 15 µm, the coating layer 3 of Cu-Zn alloy in α phase exists and Zn concentration is around 35 wt. %. In the region where the distance from the wire electrode surface is 15 to 40 µm, the coating layer 2 of Cu-Zn intermetallic layer in other than α phase exists and Zn concentration is around 45 wt. %.

In a machining process with a wire electrical discharge machine, once a single discharge occurs between the workpiece and the wire electrode, the discharge point of the wire electrode is eroded by 5 to 10 µm in a radial direction. Therefore, even if the thickness of the coating layer 3 of Cu-Zn intermetallic compound in α phase is set to 5 to 15 µm according to the present invention, the coating layer 2 of Cu-Zn intermetallic compound in other than α phase and with a high Zn concentration is exposed to the surface by one to three discharge(s) happened at the same point. Cu-Zn inter metallic compound in other than α phase, especially β phase that firstly appears when increasing Zn concentration of α phase, has larger effects of evaporating and blowing off the object material through discharges than those of α phase. Thus, because of appearance of the coating layer 2 of Cu-Zn intermetallic compound in other than α phase at the surface, machining speed by discharges can be enhanced.

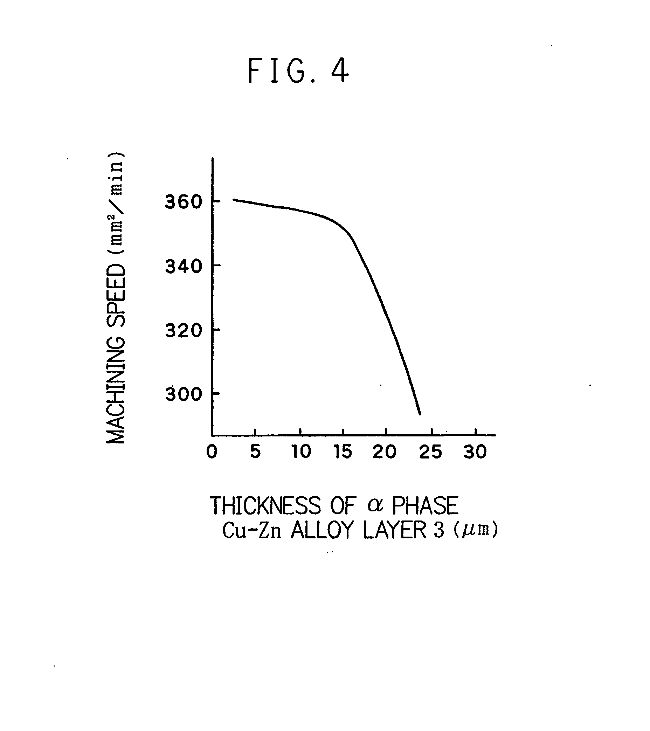

Fig. 4 shows a relationship between the thickness of the coating layer 3 of Cu-Zn alloy in α phase and machining speed. The thickness of the coating layer 2 of intermetallic compound in other than α phase is constant to be 25 µm. As is apparent from Fig. 4, machining speed is nearly constant when thickness of the coating layer 3 of Cu-Zn alloy in α phase is not more than 15 µm. That is, when thickness of the coating layer 3 of Cu-Zn alloy in α phase is not more than 15 µm, machining speed can be increased since the coating layer 2 of Cu-Zn intermetallic compound in other than α phase appears at the surface through one or two discharge(s).

When thickness of the coating layer 3 of Cu-Zn alloy in α phase is not more than 5 µm, wire drawing workability in manufacturing wire electrodes becomes extremely worse. Therefore, thickness of the coating layer 3 of Cu-Zn alloy in α phase is preferably larger than 5 µm and within 15 µm.

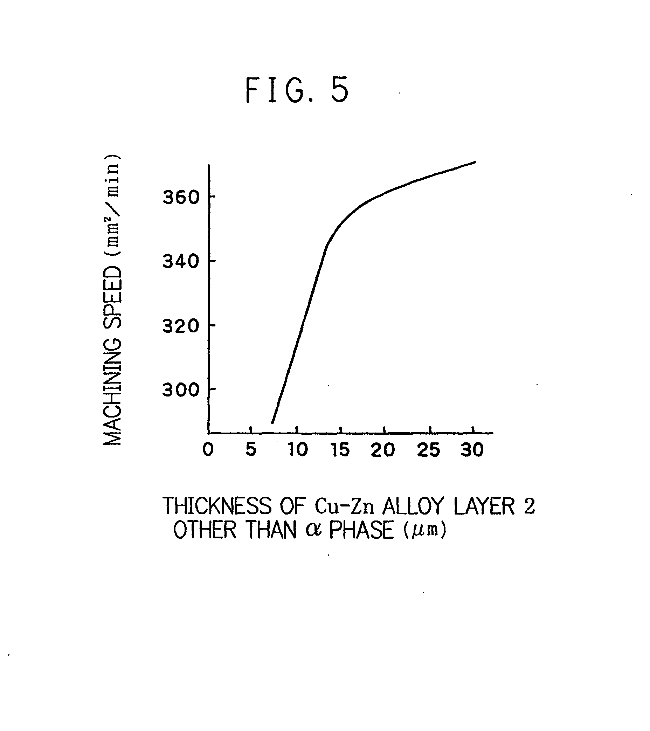

Fig. 5 shows a relationship between the thickness of the coating layer 2 of Cu-Zn intermetallic compound in other than α phase and machining speed. The thickness of the coating layer 3 of Cu-Zn alloy in α phase is constant to be 15 µm. The larger the thickness of the coating layer 2 of Cu-Zn intermetallic compound in other than α phase having a high Zn concentration is, the more machining speed is improved.

For a wire electrode having a diameter of 0.3 mm, if the thickness of the coating layer 2 of Cu-Zn intermetallic layer in other than α phase is set to 20 to 40µm, the coating layer 2 is not exhausted during electric discharge machining process so that machining can be stable and the speed thereof can be remarkably increased.

It is because there occurs difficulty in workability during wire electrode manufacturing that whole cross section except the outermost coating layer 3 cannot be made of Cu-Zn intermetallic compounds in other than α phase.

Although diameter of the wire electrode is 0.3mm in the above example, similar effect can be obtained for the case in which diameter of the wire electrode is 0.1 to 0.4mm. The reason therefore is that diameter of the core 1 is required so as not to break, with bearing tension which is applied for retaining the wire electrode, hence, minimum diameter of the wire electrode including the coating layers 2 and 3 is required to be approximately 0.1mm. Further, maximum diameter is not limited, but considering the process of wire electrode production and industrial application for the electric discharge machine, approximately 0.4mm is practical. Meanwhile, diameter of the core 1 is about 0.22mm in the case where diameter of the wire electrode is 0.3mm.

### EMBODIMENT 2

In the present embodiment, a wire electrode has a three-layered structure wherein a core 1 having a diameter of 0.22mm is surrounded by a coating layer 2 of Cu-Zn alloy in β phase having a thickness of 30 µm and further the periphery of the coating layer 2 is coated with a coating layer 3 of Cu-Zn alloy in α phase having a thickness of 10µm.

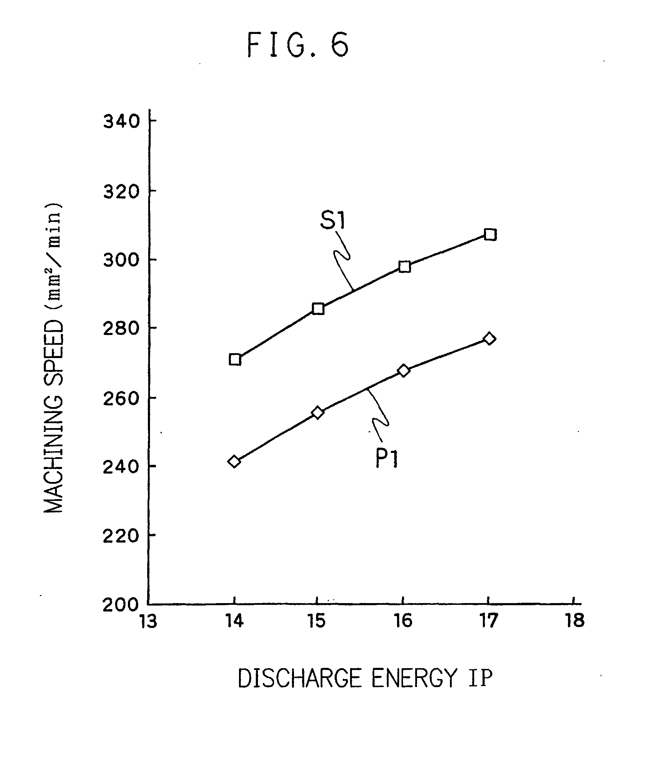

In Fig. 6, machining speed of this wire electrode is shown in comparison with that of the conventional wire electrode. As a conventional wire electrode, there was used one wherein a core having a diameter of 0.22mm is surrounded by Cu-Zn intermetallic layer having a thickness of 20 µm and in which β phase is surrounded by α phase, and the periphery of the intermetallic layer is surrounded by Cu-Zn alloy in α phase having a thickness of not more than 5 µm. As core material, Cu-Zn alloy with 35 wt. % Zn concentration was used for both of the present embodiment and the conventional wire electrode.

In Fig. 6, discharge energy IP is shown in abscissa while machining speed is shown in ordinate, and a curved line S1 denotes the wire electrode in the present embodiment while a curved line P1 denotes the conventional wire electrode. For the wire electrode of the present embodiment, an increase in machining speed by 30 mm²/min is seen at maximum compared with the conventional wire, which is found to be very useful in industrial application.

### EMBODIMENT 3

A wire electrode is exposed to extremely high temperature during wire electrical discharge machining. In the present embodiment, therefore, Cu-Zr alloy which shows little degradation in electrical conductivity and in mechanical strength to suppress vibration of the wire electrode even at a high temperature is used for a core 1, a coating layer 2 of Cu-Zn intermetallic compound in other than α phase is formed on the periphery of the core 1, and further a coating layer 3 of Cu-Zn alloy in α phase is formed on the periphery of the coating layer 2 to form a wire electrode having a three-layered structure.

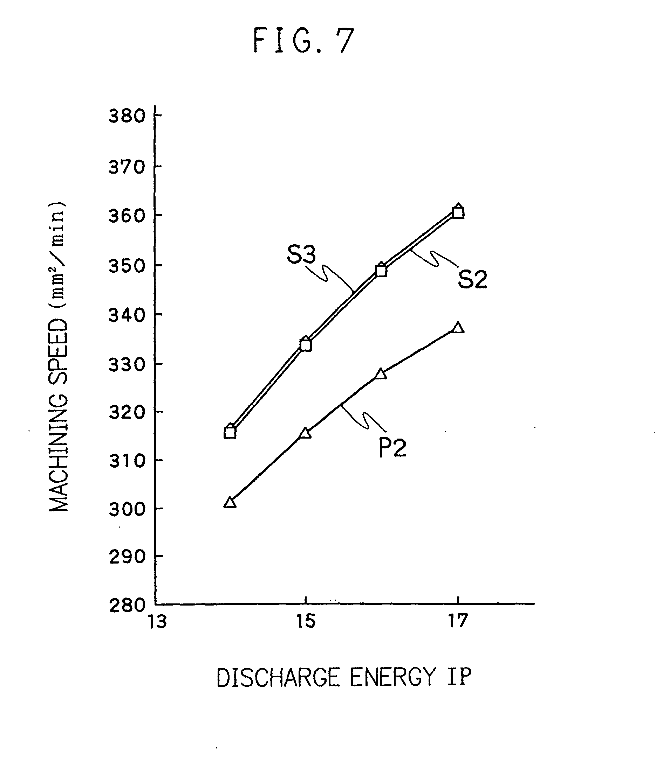

In Fig. 7, machining speed of this wire electrode is shown in comparison with that of the conventional wire electrode. As the conventional wire electrode, there was used one wherein a core of Cu-Zn alloy having a diameter of 0.22mm is surrounded by Cu-Zn intermetallic layer having a thickness of 20 µm and in which β phase is surrounded by α phase, and the periphery of the intermetallic layer is surrounded by Cu-Zn alloy in α phase having a thickness of not more than 5 µm is used.

In Fig. 7, discharge energy IP is shown in abscissa while machining speed is shown in ordinate, and a curved line S2 denotes the wire electrode of the present embodiment while a curved line P2 denotes the conventional wire. The wire electrode of the present embodiment, in addition to an effect of blowing off the debris originated from discharges thanks to the coating layer 2 of Cu-Zn intermetallic compound in other than α phase, decreases an energy loss thanks to improvement in electrical conductivity, resulting in increase of energy contributing for discharges and increase in machining speed by 30 mm²/min at maximum compared with the conventional wire electrode, which is found to be very useful in industrial application.

Further, similar effect of increase in machining speed thanks to the coating layers 2 and 3 can be obtained when the core 1 of Cu-Zr alloy is substituted by inexpensive and easily available Cu-Zn alloy which has higher tensile strength so as to suppress vibration of the wire electrode.

### EMBODIMENT 4

In the present embodiment, a wire electrode has a three-layered structure, wherein a coating layer 2 of Cu-Zn alloy in β phase is formed to surround a core 1 of Cu-Zr alloy and the periphery of the coating layer 2 is coated with a coating layer 3 of Cu-Zn alloy in α phase.

In Fig. 7, machining speed of the wire electrode according to the present embodiment is shown with a curved line S3. In addition to an effect of β phase Cu-Zn intermetaric compound layer 2 to blow off the debris generated through discharges, decrease in energy loss thanks to improvement in electrical conductivity results in increase of energy contributing for discharges so that machining speed is increased like in the case of Embodiment 3, thereby the wire electrode of the present embodiment is very useful in an industrial application.

Further, similar effect of increase in machining speed thanks to the coating layers 2 and 3 can be obtained when the core 1 of Cu-Zr alloy is substituted by inexpensive and easily available Cu-Zn alloy which has higher tensile strength so as to suppress vibration of the wire electrode.

### INDUSTRIAL APPLICABILITY

According to Embodiment 1 of the present invention, since the thickness of the coating layer 3 of Cu-Zn alloy in α phase is set to 5 to 15 µm, the wire electrode of fine diameter is easily formed without generation of any cracks and breaks even if the thickness of the coating layer 2 of Cu-Zn metallic compound in other than α phase is increased, and also high machining speed can be obtained thanks to the existence of the coating layer 2 of Cu-Zn metallic compound in other than α phase with high Zn concentration.

According to Embodiment 2 of the present invention, since the thickness of the coating layer 3 of Cu-Zn alloy in α phase is set to 5 to 15 pm, the wire electrode of fine diameter can be easily formed without generation of any cracks and breaks even if the thickness of the coating layer 2 of Cu-Zn alloy in β phase is increased. Further, high machining speed can be obtained thanks to the existence of the coating layer 2 of Cu-Zn alloy in β phase with high Zn concentration which has a large effect of blowing off the object material during discharges. Furthermore, since rigidity of the wire electrode is increased by the existence of β phase, vibration of the wire electrode during machining process is suppressed so that elimination of the object material is efficiently performed, and machining speed as well as accuracy in machining are enhanced.

According to Embodiment 3 of the present invention, since the thickness of the coating layer 3 of Cu-Zn alloy in α phase is set to 5 to 15 pm, the wire electrode of fine diameter is easily formed without generation of any cracks and breaks even if the thickness of the coating layer 2 of Cu-Zn metallic compound in other than α phase is increased, and also high machining speed can be obtained thanks to the existence of the coating layer 2 of Cu-Zn metallic compound in other than α phase with high Zn concentration. Furthermore, by using Cu-Zr alloy for the core, electrical conductivity does not decrease even at a high temperature, which results in suppressing the discharge energy loss at the wire electrode and can increases the machining speed.

Meanwhile, by using Cu-Zn alloy with a high tensile strength for the core 1, vibration of the wire electrode is suppressed and higher machining speed can be achieved.

According to Embodiment 4 of the present invention, since the thickness of the coating layer 3 of Cu-Zn alloy in α phase is set to 5 to 15 µm, the wire electrode of fine diameter can be easily formed without generation of any cracks and breaks even if the thickness of the coating layer 2 of Cu-Zn alloy in β phase is increased. Furthermore, high machining speed can be obtained thanks to the existence of the coating layer 2 of Cu-Zn alloy in β phase with high Zn concentration which has a large effect of blowing off the object material during discharges. Further, since rigidity of the wire electrode is increased by the existence of β phase, vibration of the wire electrode during machining process is suppressed so that elimination of the object material is efficiently performed, and machining speed as well as accuracy in machining are enhanced. Furthermore, by using Cu-Zr alloy for the core, electrical conductivity does not decrease even at a high temperature, which results in suppressing the discharge energy loss at the wire electrode and can increases the machining speed.

Meanwhile, by using Cu-Zn alloy with a high tensile strength for the core 1, vibration of the wire electrode is suppressed and higher machining speed can be achieved.

## Claims

1. A wire electrode for wire electrical discharge machine **characterized in that** the wire electrode has a three-layered structure comprising an electroconductive core (1), a coating layer (2) of Cu-Zn intermetalic compound in other than α phase surrounding the core (1), and a coating layer (3) of Cu-Zn alloy in α phase on the exterior of the coating layer (2), and that the thickness of the coating layer (3) is 5 to 15 µm.

2. The wire electrode for wire electrical discharge machine according to Claim 1, **characterized in that** the coating layer (2) comprises Cu-Zn alloy in β phase.

3. The wire electrode for wire electrical discharge machine according to Claim 1, **characterized in that** the core (1) comprises Cu-Zr alloy.

4. The wire electrode for wire electrical discharge machine according to Claim 2, **characterized in that** the core (1) comprises Cu-Zr alloy.

5. The wire electrode for wire electrical discharge machine according to Claim 1, **characterized in that** the core (1) comprises Cu-Zn alloy.

6. The wire electrode for wire electrical discharge machine according to Claim 2, **characterized in that** the core (1) comprises Cu-Zn alloy.
